# EUROPÄISCHE PATENTSCHRIFT

(11) **EP 0 411 447 B1**
(45) Veröffentlichungstag und Bekanntmachung des Hinweises auf die Patenterteilung: **09.06.1993**
(21) Anmeldenummer: 90114208.3
(22) Anmeldetag: 25.07.1990
(51) Int. Cl.: B23Q 3/157

(54) **Handhabungsgerät für Bearbeitungszentren der spanabhebenden Fertigung**
Automatic tool changer for a machining center
Dispositif de changement automatique d'outil pour machine-outil

(30) Priorität: 02.08.1989 DE 3925567
(43) Veröffentlichungstag der Anmeldung: 06.02.1991
(73) Patentinhaber: Hermann Kolb Maschinenfabrik AG, D-50825 Köln (DE)
(72) Erfinder: Binder, Rolf, Dipl.-Ing., D-4050 Mönchengladbach 2 (DE)
(74) Vertreter: Vièl, Georg, Dipl.-Ing.

(56) Entgegenhaltungen:
- EP-A- 0 204 151
- EP-A- 0 297 034
- EP-A- 0 310 128
- DE-A- 2 844 319
- DE-A- 3 714 125
- GB-A- 2 098 104

## Beschreibung

Die Erfindung betrifft einen Werkzeugwechsler für Bearbeitungszentren der spanabhebenden Fertigung zum Manipulieren der für die Bearbeitung erforderlichen Werkzeugsysteme, der als Ganzes in horizontaler oder vertikaler Richtung bewegbar ist, an dem ein Greifarm mit zwei um 180° versetzt angeordneten Zangen vorgesehen ist.

Die meisten bekannten Werkzeugwechsler für Werkzeugmaschinen oder Bearbeitungszentren sind nur für einen Maschinentyp ausgelegt, d.h. sie sind entweder bei einem horizontal oder einem vertikal angeordneten Spindelstock einsetzbar. Auch können mit den bekannten Werkzeugwechslern nur Werkzeuge manipuliert werden.

Aus der EP-A 0 310 128 ist ein Werkzeugwechselsystem bekannt, das offenbar geeignet ist, Werkzeuge in eine horizontal oder vertikal gerichtete Spindel einzusetzen und abzunehmen. Dieses Werkzeugwechselsystem ist nur für Werkzeuge geeignet und diese müssen noch mit ihren Anschlußelementen einheitliche Maße aufweisen.

Aus der Druckschrift DE-A-35 41 563 A1, die als nächstliegender Stand der Technik angesehen wird, ist ein Werkzeugwechsler für eine Schrägbettdrehmaschine bekannt Mit diesem Werkzeugwechsler ist es nicht möglich, Werkzeuge oder Vorsatzbearbeitungsköpfe in Bohr- und Fräswerken mit horizontaler oder vertikaler Bearbeitungsspindel zu wechseln.

Der Erfindung liegt die Aufgabe zugrunde, einen Werkzeugwechsler der eingangs näher bezeichneten Art zu schaffen, der universeller als bekannte Geräte dieser Art einsetzbar und ein schneller Wechsel von Werkzeugen und Vorsatzbearbeitungsköpfen möglich ist: Dieser Werkzeugwechsler soll nicht nur Werkzeuge bei horizontal oder vertikal sowie schräg im Raum gerichteten Spindeln austauschen können, sondern darüber hinaus in den Abmessungen die unterschiedlichsten Werkzeuge und Vorsatzbearbeitungsköpfe austauschen und die Logistik zwischen Werkzeug- und Vorsatzbearbeitungskopfmagazin abwickeln können.

Unter dem Begriff Vorsatzbearbeitungskopf ist das Element zu verstehen, das üblicherweise zwischen einer Werkzeugmaschine (Bearbeitungszentrum) und dem aufzunehmenden Werkzeug verwendet wird.

Diese Aufgabe wird erfindungsgemäß dadurch gelöst, daß der Werkzeugwechsler sowohl für Werkzeuge als auch für Vorsatzbearbeitungsköpfe ausgelegt ist, daß ein am Ende eines Vertikalarms angeordneter Tragarm um eine vertikale Achse schwenkbar ist, daß ein an dem Tragarm angeordneter Greifarm um eine horizontale Achse, die auf dem Tragarm senkrecht steht, drehbar ist, und daß die Zangen je zwei den unterschiedlichen Durchmessern der Vorsatzbearbeitungsköpfe und Werkzeuge entsprechende stufenlos, parallel verschiebbare Zangenarme aufweisen und daß die Achsen aller beweglichen Elemente inklusiv der parallel verschieblichen Zangenarme NC-gesteuert sind.

Die mit der Erfindung erzielten Vorteile bestehen insbesondere darin, daß mit dem neuen Werkzeugwechsler Vorsatzbearbeitungsköpfe und Werkzeuge unterschiedlicher Steilkegel und Flanschdurchmesser zwischen den Magazinen und den Spindeln vorzugsweise von Bearbeitungszentren mit vertikal und horizontal sowie schräg im Raum angeordneten Spindeln gewechselt werden können. Durch die erfindungsgemäße Verschiebbarkeit der Zangenarme können die variabelsten Durchmesser gehandhabt werden. Aufgrund der großen Beweglichkeit des Werkzeugwechslers können Werkzeuge in die horizontal, vertikal und schräg im Raum liegende Spindel der Bearbeitungszentren eingewechselt werden, d.h. auch in die Vorsatzbearbeitungsköpfe.

Ein Ausführungsbeispiel der Erfindung ist in den Zeichnungen dargestellt und wird im folgenden näher beschrieben.

Es zeigt
- Fig. 1: den neuen Werkzeugwechsler in einem Bearbeitungszentrum in Horizontal-Bauweise,
- Fig. 2: den neuen Werkzeugwechlser in einem Bearbeitungszentrum in Vertikal-Bauweise,
- Fig. 3: den erfindungsgemäßen Werkzeugwechsler schematisch,
- Fig. 4: den Greifarm mit den zwei Zangen und Fig. 5 diesen Greifarm in Seitenansicht.

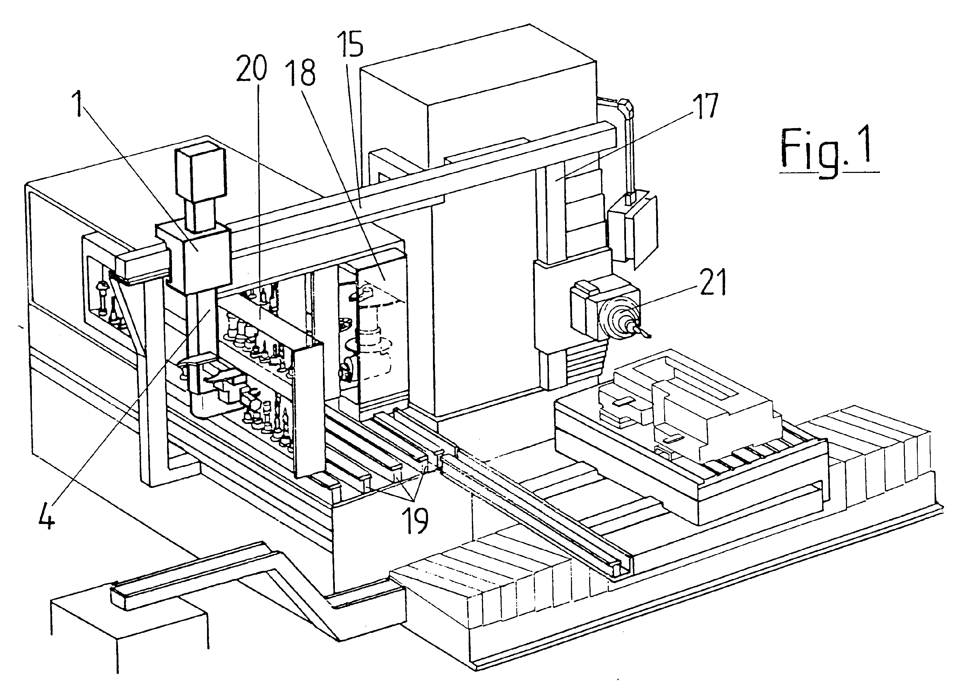

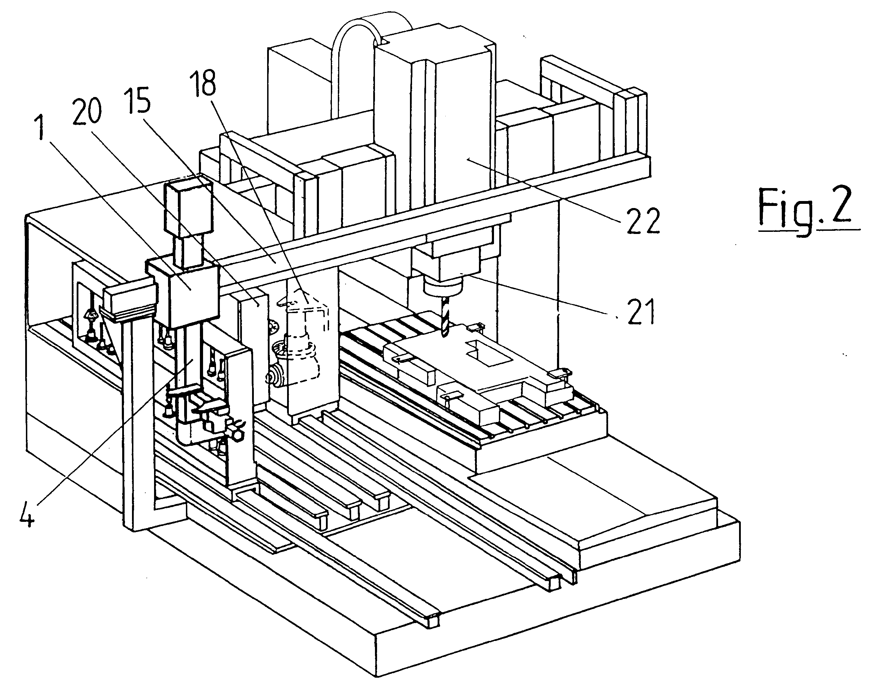

In den Fig. 1 und 2 sind ein Bearbeitungszentrum in Horizontal-Bauweise (Fig. 1) und ein Bearbeitungszentrum in Vertikal-Bauweise (Fig. 2) dargestellt, jeweils mit einem Werkzeuguechsler 1.

Wie aus Fig. 1 ersichtlich, ist das Bearbeitungszentrum 17 in Horizontal-Bauweise ausgeführt. Unmittelbar neben den Bearbeitungszentren 17 befinden sich ein oder mehrere Vorsatzbearbeitungskopfmagazine 18.

Neben dem Vorsatzbearbeitungskopf-magazin 18 befindet sich, auf Schienen 19 verfahrbar, das Magazin für die Werkzeuge 20.

Zum Ein- und Auswechseln von Vorsatzbearbeitungsköpfen und Werkzeugen in den Spindelstock 21 ist der Werkzeugwechsler 1 vorgesehen.

Das in Fig. 2 dargestellte Bearbeitungszentrum in Vertikal-Bauweise 22 ist in Portal-Bauweise ausgeführt, wie aus Fig. 2 ohne weiteres ersichtlich ist. Auch bei diesem Bearbeitungszentrum 22 in Vertikal-Bauweise ist je ein Magazin 20 für die Werkzeuge und die Vorsatzbearbeitungsköpfe vorgesehen. Der Werkzeugwechsler 1 ist identisch mit demjenigen für das Bearbeitungszentrum in Horizontal-Bauweise.

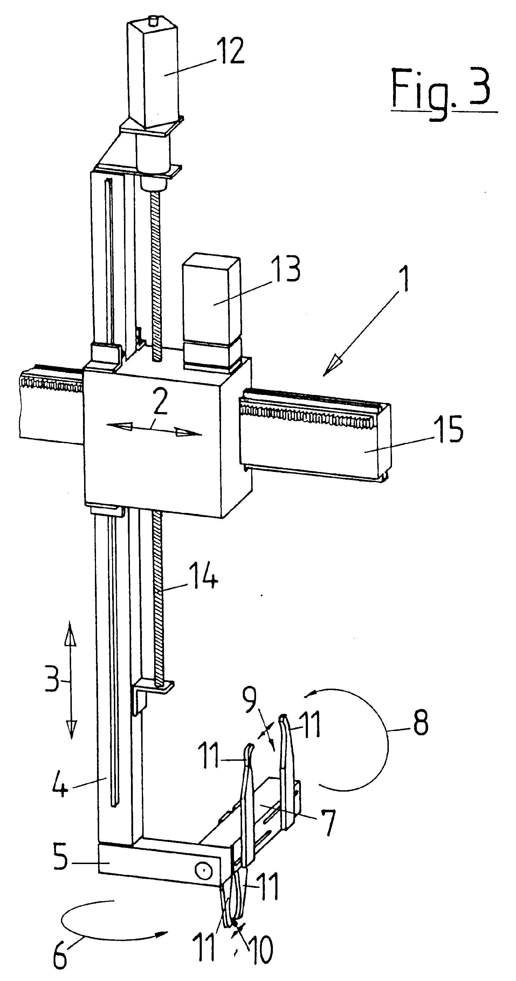

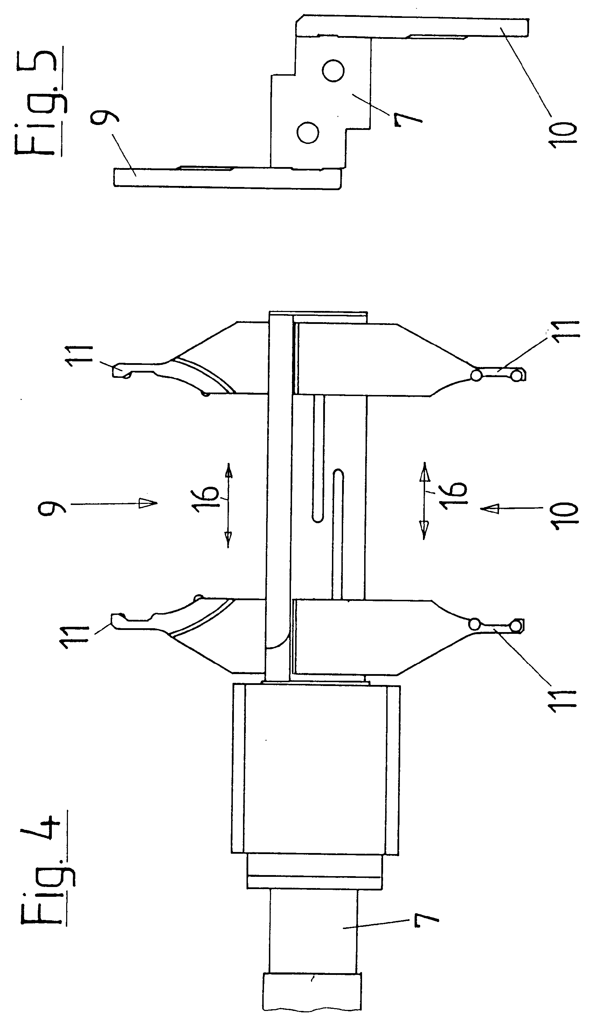

Der Werkzeugwechsler 1 gemäß Fig. 3 ist auf einer Schiene 15 mit Hilfe eines Antriebs 13 in horizontaler Richtung 2 beweglich. Eine Spindel 14, mit einem Antrieb 12 verbunden, sorgt für eine Beweglichkeit in vertikaler Rictung 3. An dem Vertikalarm 4 ist ein Tragarm 5 angeordnet, der um eine vertikale Achse schwenkbar ist. An seinem Ende weist der Tragarm 5 einen Greifarm 7 auf, der auch in den Figuren 2 und 3 detaillierter dargestellt ist. Es sind zwei um 180° versetzt angeordnete Zangen 9 und 10 vorhanden. Der Greifarm 7 ist um eine horizontale Achse schwenkbar. Die Zangen 9 und 10 haben je zwei parallel verschiebliche Zangenarme 11, die, NC-gesteuert, in Richtung der Pfeile 16 verschoben werden können (Fig. 4 und 5).

## Patentansprüche

1. Werkzeugwechsler (1) für Bearbeitungszentren (17) der spanabhebenden Fertigung zum Manipulieren der für die Bearbeitung erforderlichen Werkzeugsysteme, der als Ganzes in horizontaler (2) oder vertikaler Richtung (3) bewegbar ist, an dem ein Greifarm (7) mit zwei um 180° versetzt angeordneten Zangen (9, 10) vorgesehen ist, **dadurch gekennzeichnet,** daß der Werkzeugwechsler (1) sowohl für Werkzeuge als auch für Vorsatzbearbeitungsköpfe ausgelegt ist, daß ein am Ende eines Vertikalarms (4) angeordneter Tragarm (5) um eine vertikale Achse schwenkbar (6) ist, daß ein an dem Tragarm (5) angeordneter Greifarm (7) um eine horizontale Achse, die auf dem Tragarm (5) senkrecht steht, drehbar (8) ist, und daß die Zangen (9, 10) je zwei den unterschiedlichen Durchmessern der Vorsatzbearbeitungsköpfe und Werkzeuge entsprechende stufenlos, parallel verschiebbare Zangenarme (11) aufweisen und daß die Achsen aller beweglichen Elemente inklusiv der parallel verschieblichen Zangenarme (11) NC-gesteuert sind

## Claims

1. Tool changer (1) for machining centres (17) in production involving material removal, which is for manipulating the tool systems required for machining, is movable in its entirety in the horizontal direction (2) or vertical direction (3) and on which there is provided a gripping arm (7) with two pairs of tongs (9, 10), arranged offset by 180°, characterised in that the tool changer (1) is designed both for tools and for attachment machining heads, in that a supporting arm (5), arranged at the end of a vertical arm (4), can be swivelled (6) about a vertical axis, in that a gripping arm (7), arranged on the supporting arm (5), can be turned (8) about a horizontal axis, which is perpendicular on the supporting arm (5), and in that the pairs of tongs (9, 10) each have two tong arms (11) which can be displaced steplessly in parallel corresponding to the different diameters of the attachment machining heads and tools and in that the axes of all the movable elements, including the parallel-displaceable tong arms (11), are numerically controlled.

## Revendications

1. Changeur d'outils (1) pour des centres d'usinage (17) dans le domaine de la fabrication avec enlèvement de copeaux pour la manipulation des systèmes d'outils nécessaires pour l'usinage, et qui est déplaçable dans son ensemble dans une direction horizontale (2) ou dans une direction verticale (3) et sur lequel il est prévu un bras de préhension (7) comportant deux pinces (9,10) décalées des 180°, caractérisé par le fait que le changeur d'outils (1) est conçu aussi bien pour des outils que pour des têtes d'usinage adaptables, qu'un bras de support (5) monté à l'extrémité d'un bras vertical (4), peut pivoter (6) autour d'un axe vertical, qu'un bras de préhension (7), monté sur le bras de support (5), peut pivoter (8) autour d'un axe horizontal, qui est perpendiculaire au bras de support (5), et que les pinces (9,10) comportent respectivement deux mâchoires (11), qui correspondent aux diamètres différents des têtes d'usinage adaptables et des outils et peuvent être déplacées progressivement en parallèle, et que les axes de tous les éléments mobiles y compris les mâchoires (11) de la pince, déplaçables parallèlement, sont commandés au moyen d'une commande numérique.
